# EUROPÄISCHE PATENTSCHRIFT

(11) **EP 1 116 609 B1**
(45) Veröffentlichungstag und Bekanntmachung des Hinweises auf die Patenterteilung: **22.02.2006**
(21) Anmeldenummer: 00126937.2
(22) Anmeldetag: 08.12.2000
(51) Int. Cl.: B60D 1/02

(54) **Anhängerkupplung**
Trailer coupling
Attelage de remorque

(30) Priorität: 12.01.2000 DE 10000848
(43) Veröffentlichungstag der Anmeldung: 18.07.2001
(73) Patentinhaber: Cramer Kupplung GmbH & Co. KG, 45356 Essen (DE)
(72) Erfinder: Staude, Rudolf, Dr. Ing., 42111 Wuppertal (DE); Afflerbach, Henning F., Dipl.-Ing., 44227 Dortmund (DE); Gottschling, Reinhard, Dipl.-Ing., 45289 Essen (DE)
(74) Vertreter: Honke, Manfred

(56) Entgegenhaltungen:
- EP-A- 0 965 466
- DE-A- 3 223 850
- DE-A- 3 834 305
- DE-A- 4 133 610
- DE-B- 1 145 494
- DE-C- 889 552
- DE-C- 933 970

## Beschreibung

Die Erfindung betrifft eine Anhängerkupplung mit einem Kupplungsmaul, einem in dem Kupplungsmaul anhebbaren und absenkbaren Kupplungsbolzen, zumindest einem Sicherungsbolzen zur Sicherung des in Schließstellung abgesenkten Kupplungsbolzens gegen Anheben und mit einem Hubmechanismus für den Kupplungsbolzen.

Es ist eine derartige Anhängerkupplung bekannt, bei welcher der Kupplungsbolzen zwischen Offenstellung und Schließstellung lediglich linear verstellbar und undrehbar geführt ist. Der Hubmechanismus dient zugleich zum Verriegeln des Kupplungsbolzens in beiden Stellungen, wobei der Kupplungsbolzen in Schließstellung durch einen formschlüssig blockierten Kniegelenkmechanismus verriegelt wird. Bei dieser bekannten Ausführungsform werden die von der eingekuppelten Zugöse in Anlage gegen den Kupplungsbolzen erzeugten Drehmomente unmittelbar auf den Hubmechanismus übertragen, so dass der Hubmechanismus tordierenden Beanspruchungen unterliegt. Darüber hinaus werden aber auch von der Zugöse erzeugte Schubkräfte von dem Kupplungsbolzen unmittelbar auf den Hubmechanismus übertragen, so dass der Hubmechanismus nicht nur Torsionsbeanspruchungen, sondern auch Schubbeanspruchungen unterliegt. Das führt zu erheblichen Verschleißerscheinungen und zu verkürzter Lebensdauer.

Der Erfindung liegt die Aufgabe zugrunde, eine Anhängerkupplung der eingangs beschriebenen Ausführungsform zu schaffen, die sich in kostensparender Weise durch erhöhte Funktionssicherheit und Verschleißarmut auszeichnet.

Zur Lösung dieser Aufgabe ist die gattungsgemäße Anhängerkupplung dadurch gekennzeichnet, dass das Kupplungsmaul in an sich bekannter Weise um eine im wesentlichen vertikale Schwenkachse verschwenkbar in einem U-förmigen Lagermaul gelagert ist, und dass der Kupplungsbolzen um eine vertikale Drehachse in dem Lagermaul drehbar gelagert ist. Im Rahmen der Erfindung können die Schwenkachse für das Kupplungsmaul und die Drehachse für den Kupplungsbolzen zusammenfallen. Stets wird eine gleichmäßige Drehmomentenübertragung erreicht, wobei der Hubmechanismus für den Kupplungsbolzen weder tordierende Beanspruchungen noch Schubbeanspruchungen aufzunehmen hat.

Weitere erfindungswesentliche Merkmale sind im folgenden aufgeführt. So ist erfindungsgemäß eine Sperrklinke zum Verriegeln und Entriegeln der Schwenkbewegungen des Kupplungsmauls vorgesehen. Weiter lehrt die Erfindung, dass der Hubmechanismus für den Kupplungsbolzen eine mit dem Kupplungsbolzen in Eingriff stehende Hubgabel aufweist. Die Hubgabel betätigt nach einem weiteren Vorschlag der Erfindung nicht nur den Kupplungsbolzen, sondern auch den oder die Sicherungsbolzen und die Sperrklinke. Insoweit wird eine multifunktionale Hubgabel verwirklicht. Tatsächlich wird die Sperrklinke durch die Hubgabel gesteuert. Sie übernimmt die Entriegelungsfunktion für die Schwenkbewegung des Kupplungsmauls. Die Sperrklinke wird durch eine form- und kraftschlüssige Bewegung der Hubgabel in ihre jeweilige Position gebracht, um das Kupplungsmaul zu entriegeln bzw. mittels einer sie beaufschlagenden Sperrklinkenfeder zu verriegeln.

Im Ergebnis wird eine kostensparende Anhängerkupplung mit relativ wenig Konstruktionsteilen durch Verwendung von Multifunktionsteilen verwirklicht, die funktionssicher arbeitet und sich durch erhöhte Verschleißarmut auszeichnet.

Im folgenden wird die Erfindung anhand einer lediglich ein Ausführungsbeispiel darstellenden Zeichnung näher erläutert. Es zeigen:

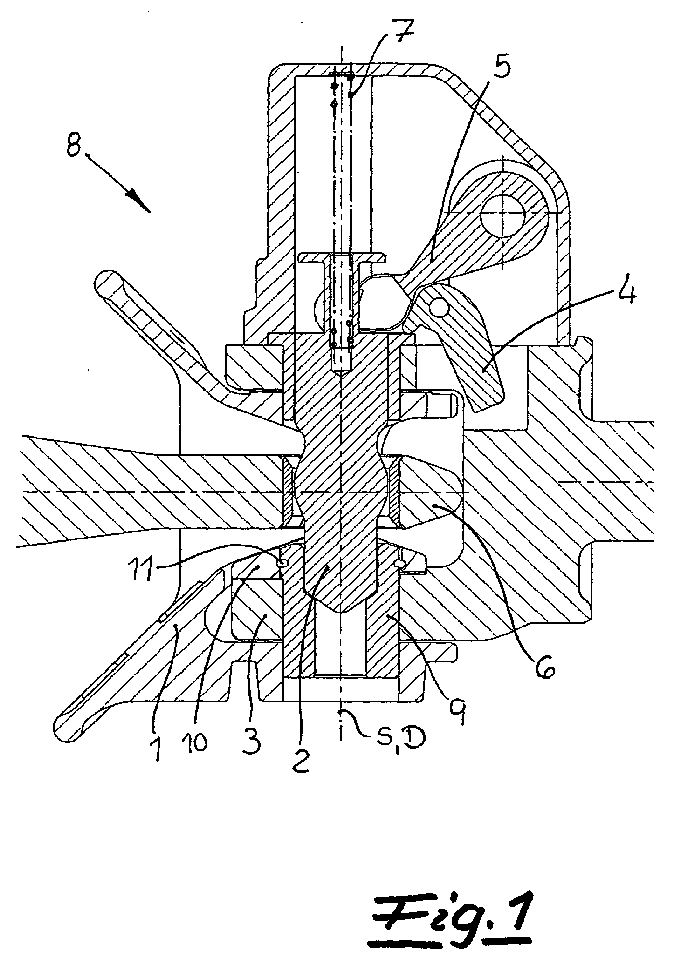

- Fig. 1: einen Vertikalschnitt durch eine erfindungsgemäße Anhängerkupplung in Verriegelungsstellung,

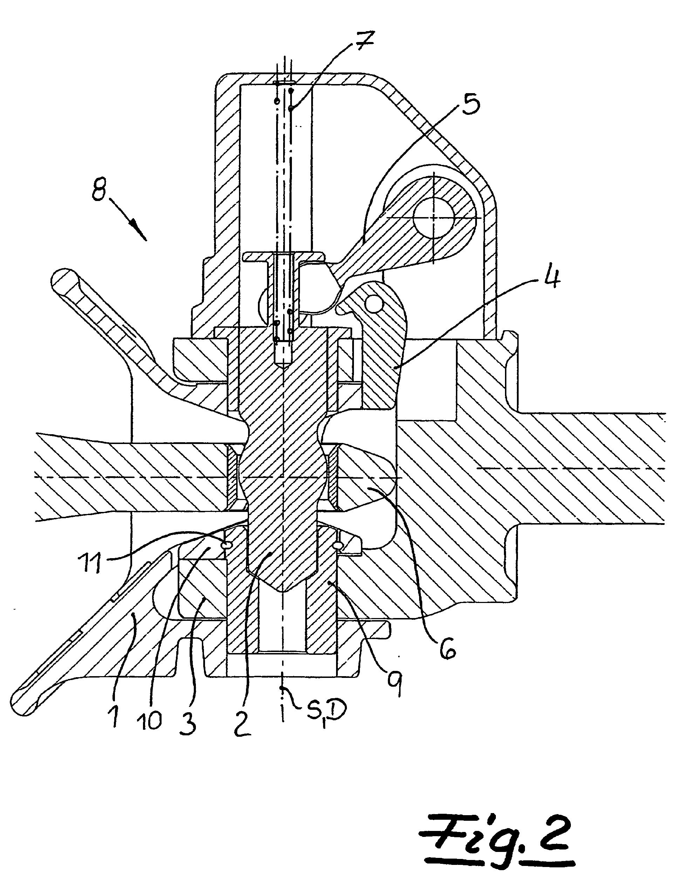

- Fig. 2: den Gegenstand nach Fig. 1 in Entriegelungsstellung und

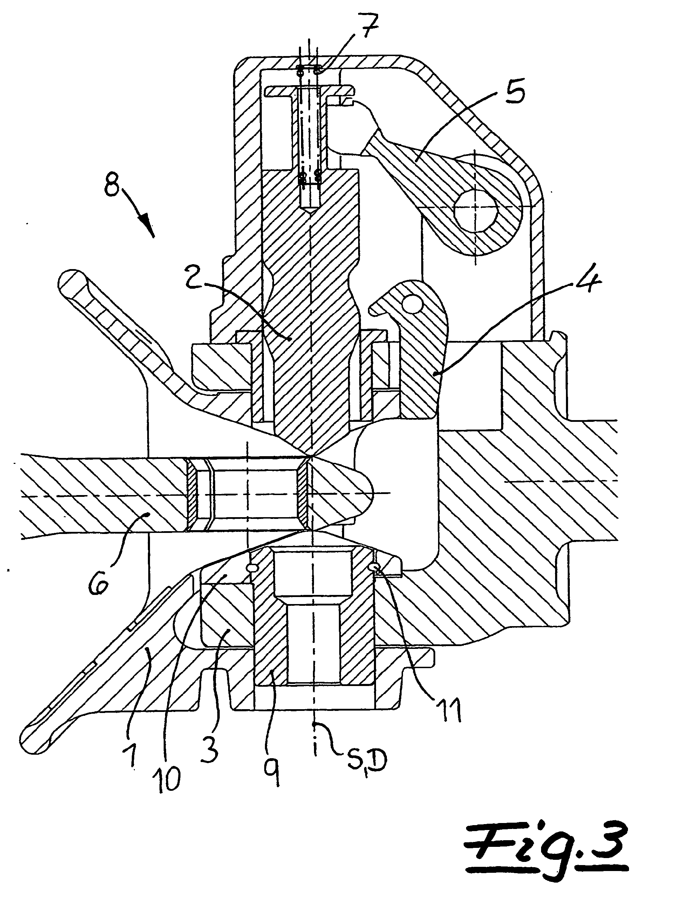

- Fig. 3: den Gegenstand nach Fig. 2 in Auslösestellung.

In den Figuren ist eine Anhängerkupplung mit einem Kupplungsmaul 1 und einem in dem Kupplungsmaul 1 anhebbaren und absenkbaren Kupplungsbolzen 2 dargestellt. Darüber hinaus sind zwei sich diametral gegenüberliegende Sicherungsbolzen zur Sicherung des in Schließstellung abgesenkten Kupplungsbolzen 2 gegen Anheben vorgesehen, die nicht gezeigt sind. Der Kupplungsbolzen 2 wird mittels eines Hubmechanismus betätigt. Das Kupplungsmaul 1 ist um eine im wesentlichen vertikale Schwenkachse S verschwenkbar in einem U-förmigen Lagermaul 3 gelagert. Der Kupplungsbolzen 2 ist um eine vertikale Drehachse D in dem Lagermaul 3 drehbar gelagert, wobei nach dem Ausführungsbeispiel Schwenkachse S und Drehachse D zusammenfallen. Ferner ist eine Sperrklinke 4 zum Verriegeln und Entriegeln der Schwenkbewegung des Kupplungsmauls 1 vorgesehen.

Der Hubmechanismus für den Kupplungsbolzen 2 weist eine mit den Kupplungsbolzen 2 in Eingriff stehende Hubgabel 5 auf. Die Hubgabel 5 betätigt den Kupplungsbolzen 2, den oder die Sicherungsbolzen und die Sperrklinke 4. Ferner ist die Hubgabel 5 von zwei unabhängig voneinander wirkenden Schließfedern beaufschlagt und mittels eines Schwenkhebels betätigbar. Auch das ist nicht gezeigt. Das Absenken des Kupplungsbolzens 2 in Schließstellung erfolgt selbsttätig durch das Einführen einer Zugöse 6 in das Kupplungsmaul 1 infolge einer dadurch aufgehobenen Rastung des Kupplungsbolzens 2 an der Hubgabel. Der Kupplungsbolzen 2 ist ebenfalls von einer Schließfeder z. B. Rastfeder 7 in Richtung Schließstellung belastet.

Außerdem ist ein separater Kupplungskopf 8 verwirklicht, der unabhängig von dem Kupplungsmaul 1 austauschbar ist. Der Kupplungskopf 8 besteht im wesentlichen aus dem Lagermaul 3, die Hubgabel 5, den beiden Sicherungsbolzen und dem Bedienungsmechanismus für die Hubgabel 5.

Der frei drehbare Kupplungsbolzen 2 unterliegt nur geringem Verschleiß und ermöglicht einen schnellen Schließvorgang. Zwei unabhängig voneinander formschlüssig wirkende Sicherungsbolzen vermeiden Stoßbelastungen auf den Hubmechanismus und folglich die Hubgabel 5. Das Öffnen der Anhängerkupplung erfolgt durch die Bedienung der Hubgabel 5 mittels des Schwenkhebels, der sich auf der Achse der Hubgabel 5 befindet. Stets wird eine automatische Entriegelung/Verriegelung des Kupplungsmauls 1 beim Schließen/Öffnen der Anhängerkupplung erreicht.

Im übrigen ist der Kupplungsbolzen 2 in einer zweiteiligen Kupplungshülse mit einer Sattelhülse 9 und obenliegender Sattelplatte 10 geführt, die mittels eines Sicherungsringes 11 fixiert und im Verschleißfall austauschbar ist.

## Patentansprüche

1. Anhängerkupplung mit einem Kupplungsmaul, einem in dem Kupplungsmaul anhebbaren und absenkbaren Kupplungsbolzen, zumindest einem Sicherungsbolzen zur Sicherung des in Schließstellung abgesenkten Kupplungsbolzens gegen Anheben und mit einem Hubmechanismus für den Kupplungsbolzen, wobei das Kupplungsmaul (1) um eine im wesentlichen vertikale Schwenkachse (S) verschwenkbar in einem Lagermaul (3) gelagert ist, **dadurch gekennzeichnet, dass** der Kupplungsbolzen (2) um eine vertikale Drehachse (D) in dem Lagermaul (3) drehbar gelagert ist.

2. Anhängerkupplung nach Anspruch 1, **dadurch gekennzeichnet, dass** eine Sperrklinke (4) zum Verriegeln und Entriegeln der Schwenkbewegungen des Kupplungsmauls (1) vorgesehen ist.

3. Anhängerkupplung nach Anspruch 1 oder 2, **dadurch gekennzeichnet, dass** der Hubmechanismus für den Kupplungsbolzen (2) eine mit dem Kupplungsbolzen (2) in Eingriff stehende Hubgabel (5) aufweist.

4. Anhängerkupplung nach einem der Ansprüche 1 bis 3, **dadurch gekennzeichnet, dass** die Hubgabel (5) den Kupplungsbolzen (2), den oder die Sicherungsbolzen und die Sperrklinke (4) betätigt.

5. Anhängerkupplung nach einem der Ansprüche 1 bis 4, **dadurch gekennzeichnet, dass** die Hubgabel (5) von zwei unabhängig voneinander wirkenden Schließfedern beaufschlagt und mittels eines Schwenkhebels betätigbar ist.

6. Anhängerkupplung nach einem der Ansprüche 1 bis 5, **dadurch gekennzeichnet, dass** das Absenken des Kupplungsbolzens (2) in Schließstellung selbsttätig durch das Einführen einer Zugöse (6) in das Kupplungsmaul (1) infolge einer **dadurch** aufgehobenen Rastung des Kupplungsbolzens (2) an der Hubgabel (5) erfolgt.

7. Anhängerkupplung nach einem der Ansprüche 1 bis 6, **dadurch gekennzeichnet, dass** der Kupplungsbolzen (2) von einer Schließfeder (7), z. B. Rastfeder in Richtung Schließstellung belastet ist.

8. Anhängerkupplung nach einem der Ansprüche 1 bis 7, **dadurch gekennzeichnet, dass** der Kupplungsbolzen (2) in einer zweiteiligen Kupplungshülse mit einer Sattelhülse (9) und obenliegender Sattelplatte (10) geführt ist, die mittels eines Sicherungsringes (11) fixiert und austauschbar ist.

9. Anhängerkupplung nach einem der Ansprüche 1 bis 8, **gekennzeichnet durch** einen separaten Kupplungskopf (8), der unabhängig von dem Kupplungsmaul (1) austauschbar ist.

10. Anhängerkupplung nach einem der Ansprüche 1 bis 9, **gekennzeichnet durch** einen einstellbaren federbelasteten Mechanismus, der das Kupplungsmaul (1) nach seitlicher Auslenkung in die Mittelstellung zurückfährt (Kupplung geschlossen bedeutet Kupplungsmaul entriegelt, Kupplung geöffnet bedeutet Kupplungsmaul verriegelt).

## Claims

1. A trailer coupling comprising a coupling jaw, a coupling bolt which can be raised and lowered in said coupling jaw, at least one securing bolt for securing the coupled bolt lowered into the closed position against raising and comprising a lifting mechanism for the coupling bolt, wherein the coupling jaw (1) is mounted in a bearing jaw (3) such that it can pivot about a substantially vertical pivot axis (S), **characterised in that** the coupling bolt (2) is rotatably mounted about a vertical axis of rotation (D) in the bearing jaw (3).

2. The trailer coupling according to claim 1, **characterised in that** a pawl (4) is provided for locking and unlocking the pivoting movements of the coupling jaw (1).

3. The trailer coupling according to claim 1 or 2, **characterised in that** the lifting mechanism for the coupling bolt (2) has a lifting fork (5) in engagement with the coupling bolt (2).

4. The trailer coupling according to any one of claims 1 to 3, **characterised in that** the lifting fork (5) actuates the coupling bolt (2), the securing bolt and the pawl (4).

5. The trailer coupling according to any one of claims 1 to 3, **characterised in that** the lifting fork (5) is acted upon by two closing springs acting independently of one another and is actuated by means of a pivoted lever.

6. The trailer coupling according to any one of claims 1 to 5, **characterised in that** the lowering of the coupling bolt (2) into the closed position takes place automatically by the insertion of a drawbar eye (6) into the coupling jaw (1) as a result of a latching of the coupling bolt (2) on the lifting fork (5) which is thereby cancelled out.

7. The trailer coupling according to any one of claims 1 to 6, **characterised in that** the coupling bolt (2) is loaded by a closing spring (7), e.g. a detent spring in the direction of the closed position.

8. The trailer coupling according to any one of claims 1 to 7, **characterised in that** the coupling bolt (2) is guided in a two-part coupling sleeve comprising a saddle sleeve (9) and upper saddle plate (10), which is fixed and exchangeable by means of a securing ring (11).

9. The trailer coupling according to any one of claims 1 to 8, **characterised by** a separate coupling head (8) which is exchangeable independently of the coupling jaw (1).

10. The trailer coupling according to any one of claims 1 to 9, **characterised by** an adjustable spring-loaded mechanism which returns the coupling jaw (1) to the middle position after lateral deflection (coupling closed means coupling jaw unlocked, coupling open means coupling jaw locked).

## Revendications

1. Attelage de remorque avec une mâchoire d'attelage, un boulon d'attelage pouvant être soulevé et abaissé dans la mâchoire d'attelage, au moins un axe de blocage pour bloquer l'axe d'attelage abaissé dans la position de fermeture contre un soulèvement, et avec un mécanisme de levage pour l'axe d'attelage, la mâchoire d'attelage (1) étant montée à pivotement autour d'un axe de pivotement (S) essentiellement vertical, dans un mâchoire de montage (3), **caractérisé en ce que** l'axe d'attelage (2) est monté à rotation autour d'un axe de rotation vertical (D) dans la mâchoire de montage (3).

2. Attelage de remorque selon la revendication 1, **caractérisé en ce qu'**un cliquet d'arrêt (4) est prévu pour verrouiller et déverrouiller les mouvements de pivotement de la mâchoire d'attelage (1).

3. Attelage de remorque selon la revendication 1 ou 2, **caractérisé en ce que** le mécanisme de levage pour l'axe d'attelage (2) présente une fourche de levage (5) se trouvant en prise avec l'axe d'attelage (2).

4. Attelage de remorque selon l'une quelconque des revendications 1 à 3, **caractérisé en ce que** la fourche de levage (5) actionne l'axe d'attelage (2), le ou les axes de blocage et le cliquet d'arrêt (4).

5. Attelage de remorque selon l'une quelconque des revendications 1 à 4, **caractérisé en ce que** la fourche de levage (5) est sollicitée par deux ressorts de fermeture agissant indépendamment l'un de l'autre et peut être actionnée au moyen d'un levier pivotant.

6. Attelage de remorque selon l'une quelconque des revendications 1 à 5, **caractérisé en ce que** l'abaissement de l'axe d'attelage (2) se réalise automatiquement dans la position de fermeture par l'introduction d'un anneau de traction (6) dans la mâchoire d'attelage (1) à la suite d'un encliquetage ainsi débloqué de l'axe d'attelage (2) sur la fourche de levage (5).

7. Attelage de remorque selon l'une quelconque des revendications 1 à 6, **caractérisé en ce que** l'axe d'attelage (2) est chargé par un ressort de fermeture (7), par exemple un ressort à cran d'arrêt dans la direction de la position de fermeture.

8. Attelage de remorque selon l'une quelconque des revendications 1 à 7, **caractérisé en ce que** l'axe d'attelage (2) est conduit dans un manchon d'attelage à deux pièces, avec une douille de sellette (9) et une plaque de sellette se trouvant au-dessus (10), qui est fixée au moyen d'un anneau de blocage (11) et qui est échangeable.

9. Attelage de remorque selon l'une quelconque des revendications 1 à 8, **caractérisé par** une tête d'attelage séparée (8) qui est échangeable indépendamment de la mâchoire d'attelage (1).

10. Attelage de remorque selon l'une quelconque des revendications 1 à 9, **caractérisé par** un mécanisme ajustable sollicité par un ressort qui ramène la mâchoire d'attelage (1) dans la position centrale après une déviation latérale (attelage fermé signifie mâchoire d'attelage déverrouillée, attelage ouvert signifie mâchoire d'attelage verrouillée).
